Europäisches Patentamt

(19) European Patent Office

Office européen des brevets

(11) Numéro de publication: **0 016 734**

**A1**

(12) # DEMANDE DE BREVET EUROPEEN

(21) Numéro de dépôt: **80810102.6**

(22) Date de dépôt: **26.03.80**

(51) Int. Cl.³: **B 30 B 9/06**
**C 10 L 5/40**

(30) Priorité: **27.03.79 CH 2835/79**

(43) Date de publication de la demande:
**01.10.80 Bulletin 80/20**

(84) Etats Contractants Désignés:
**AT BE FR GB IT NL SE**

(71) Demandeur: **Baikoff Eugène M.A.**
**ch. Anciens Moulins 2A**
**CH-1009 Pully/Vaud(CH)**

(72) Inventeur: **Baikoff Eugène M.A.**
**ch. Anciens Moulins 2A**
**CH-1009 Pully/Vaud(CH)**

(74) Mandataire: **Bovard, Fritz Albert et al,**
**Bovard & Cie, Ingénieurs- Conseils ACP et Avocats**
**Optingenstrasse 16**
**CH-3000 Berne 25(CH)**

(54) **Procédé de compression séparatrice de déchets, appareil pour la mise en oeuvre de ce procédé, brique et/ou boue résultant de ce procédé.**

(57) Le procédé et l'appareil de compression séparatrice de déchets utilisent un agencement à pistons (17, 18) agissant sur une masse de déchets se trouvant dans un réceptacle formé d'une paroi cylindrique (5) et d'un fond constitué par un contre-piston (16). Ce contre-piston peut venir s'engager de façon à obturer des orifices d'échappement de boues (24), pendant une première partie de la compression à l'aide de l'agencement à pistons (17, 18). Ensuite, ce contre-piston (16) descend de façon à libérer ces orifices lorsqu'une certaine pression est atteinte. L'agencement à pistons de compression (17, 18) comprend deux pistons coaxiaux qui sont agencés pour assurer constamment une pression substantiellement uniforme dans la masse de déchets. On peut ainsi extraire pratiquement toutes les matières liquides, pâteuses ou fluables des déchets, pour obtenir des boues utiles à l'agriculture. On obtient aussi des briques de déchets pratiquement sèches et très peu friables, les déchets n'étant pas broyés mais internement cixaillés et contractés, ce qui permet un bon agglomérat.

Les briques obtenues sont avantageusement utilisées comme briquettes combustibles de chauffage.

./...

FIG. 2

Procédé de compression séparatrice de déchets, appareil pour la mise en oeuvre de ce procédé, brique et/ou boue résultant de ce procédé

La présente invention concerne un procédé de compression séparatrice de déchets, notamment de déchets composés au moins partiellement de matière organiques, afin d'en extraire d'une part, sous forme liquide ou pâteuse, des boues contenant de l'eau avec des matières organiques et/ou des matières biologiquement utiles, et d'autre part, sous forme solide et formées de déchets comprimés, des briques suffisamment peu friables pour permettre un stockage et diverses manutentions d'utilisation notamment en tant que briquettes combustibles. L'invention concerne également un appareil pour la mise en oeuvre de ce procédé; elle concerne également les briques solides et les boues liquides ou pâteuses résultant de ce procédé, et propose leur utilisation en tant que briquettes de chauffage pour les premières et en tant qu'additifs de sol pour les secondes.

On a déjà proposé des machines et procédés pour séparer les déchets en boues liquides ou pâteuses d'une part et un corps pratiquement dépourvues d'humidité

2

d'autre part. On peut citer notamment à ce sujet un appareil offert sur le marché et au moins partiellement décrit dans l'exposé de brevet français no 2 389 577 (demande no 77 13 587).

Toutefois, ces machines connues travaillaient d'une façon qui provoquait un broyage intensif des déchets. En effet, un piston de compression venait comprimer seulement une partie d'une masse de déchets contenue dans un réceptacle, puis on avait un phénomène de récurrence, c'est-à-dire que le piston se retirait, et un autre piston venait modifier la forme de pot établie par la première compression en une forme de galette dans laquelle le premier piston revenait établir une nouvelle compression, et ainsi de suite. Il est clair qu'une partie de la masse, située en face du piston de compression, était comprimée avec une grande pression, tandis que la partie de la masse située à côté de ce piston de forme cylindrique ne subissait pratiquement pas son action. Il faut en effet bien comprendre que des déchets de tout ordre n'obéissent aucunement aux lois de l'hydrostatique (qui donnerait la même pression en tous les endroits), pas plus du reste qu'ils n'obéissent aux lois de la mécanique des corps rigides, dans laquelle les forces sont calculées sans tenir compte des effets de fluage. Les lois qui régissent le phénomène de compression d'une masse de déchets sont par contre les lois de la mécanique des sols, science dont les principes et les détails sont développés par exemple dans le manuel "SOILS AND SOIL ENGINEERING de R.H. Karol, paru aux éditions Prentice-Hall Inc. à Englewood Cliffs, New Jersey, USA 1960.

Cette mécanique des sols comporte du reste différents cas, l'un est celui de la répartition des pressions dans un sol dont le volume est supposé infini, et un autre est celui de la répartition des pressions dans un sol admis comme entouré de parois rigides. Les champs de courbes isobares, appliqués aux pistons selon la conception particulière que l'on va proposer, sont de la forme représentée par exemple aux fig. 1 et 2 annexées. On pourra également à ce sujet considérer avec intérêt la figure 13.3 de la page 127 du manuel précédemment mentionné.

On comprend dans ce cas qu'un appareil, s'il doit extraire véritablement toutes les matières liquides pâteuses ou fluables d'une masse de déchets, doit être agencé pour établir au moins dans une certaine mesure une pression homogène dans la masse de déchets. Les appareils selon la technique antérieure ne répondaient pas à cette condition, du moins pas dans le cas de la première opération d'enfoncement d'un piston dans une masse de matériau à traiter. Cette première opération donnait à cette masse une forme de pot dont le fond était fortement comprimé mais dont les bords ne l'étaient pratiquement pas. Une opération intermédiaire de reformage d'une galette était nécessaire, ensuite de quoi une nouvelle opération de compression avait lieu, et ces opérations de reformage avaient pour conséquence un broyage de la masse qui empêchait celle-ci de conserver une certaine tenacité. De ce fait, les briques obtenues à l'aide des machines antérieurement connues étaient très friables. Par ailleurs, dans les machines selon l'art antérieur connues, les boues liquides ou pâteuses (dénommées aussi parfois phases liquides) s'échappaient par des stries établies le long du piston de compression. Ainsi l'échappement débutait dès que la compression s'exerçait, et il n'y avait pas de phase préparatoire de compression sans échappement. Cela semble-t-il contribuait également à rendre les briques plus friables, et il n'était guère possible d'en envisager l'utilisation comme combustible, sinon comme combustible sous forme de déchets de très petites dimensions qui résultaient d'un effritement des briques intervenant lors de leur stockage ou de leur manutention.

4

Des agencements du même genre sont également proposés par les exposés de brevets FR-A-487 552, FR-A-419 408 et FR-A-617 721. Aucun de ces exposés toutefois n'entre en matière sur des questions de répartition de compression sur la base de la "mécanique des sols".

Le but de la présente invention est de fournir un procédé et un appareil du type en question qui présentent une construction et un mode de mise en oeuvre différents de ce que connaissait l'art antérieur et qui permettent d'obtenir aisément des produits de bonne qualité notamment en ce qui concerne les briques solides que, selon la présente invention, on destine à servir de combustible, notamment.

Conformément à l'invention, ce but susmentionné est atteint par la présence des caractères mentionnés dans les revendications indépendantes annexées. Les revendications qui leur sont subordonnées définissent des formes de mise en oeuvre ou d'exécution particulièrement avantageuses, notamment en ce qui concerne la construction, l'homogénéité de la compression, la facilité de mettre en oeuvre le procédé et de desservir la machine destinée à cette mise en oeuvre, etc.

Le dessin annexé illustre, à titre d'exemple, une forme d'exécution de l'objet de l'invention; dans ce dessin:

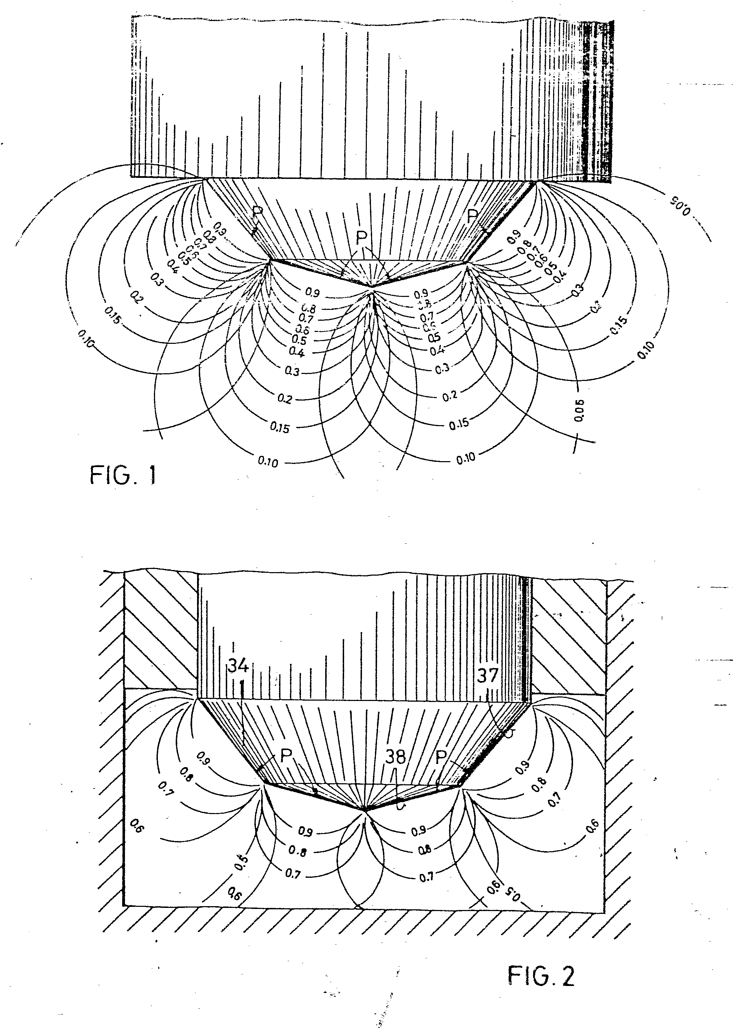

la fig. 1 illustre la répartition des pressions dans un matériau de la nature d'un sol ou d'une masse de déchets, sous l'action d'un organe de pression à surfaces tronconiques et coniques, dans le cas où le volume de fluage du sol ou de la masse est supposé infini,

la fig. 2 est une vue explicative shématique semblable à celle de la fig. 1, mais appliquée, toujours selon les principes de la mécanique des sols, au cas où le sol ou la masse ne peut fluer que dans un espace strictement limité,

5

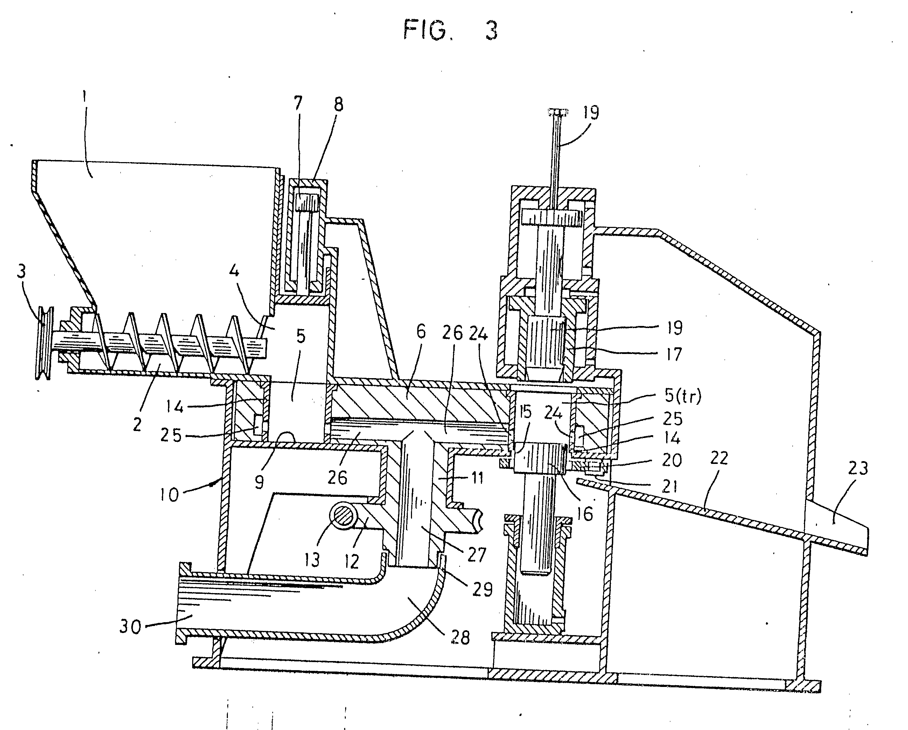

la fig. 3 est une vue schématique d'un appareil complet pour la mise en oeuvre d'un procédé de compression séparatrice de déchets du type selon la conception particulière proposée,

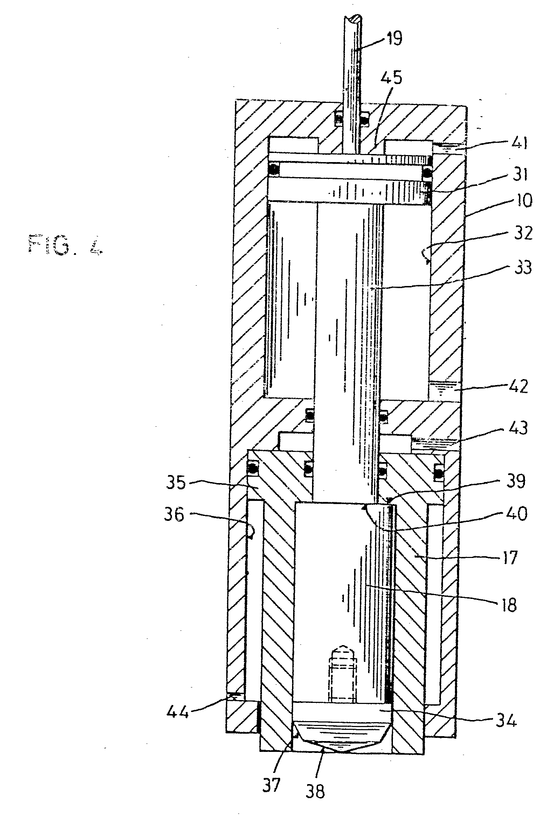

la fig. 4 est une vue en coupe d'un agencement à pistons comprenant deux pistons coaxiaux qui constituent un élément important de l'appareil selon la fig. 3,

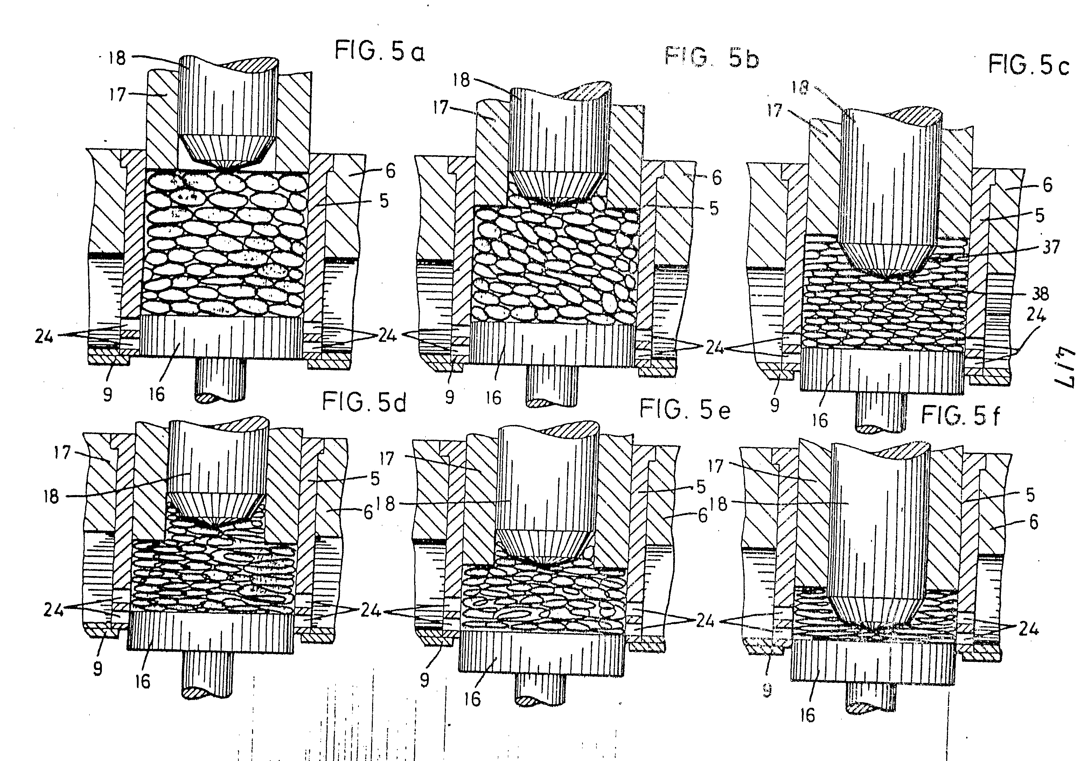

les fig. 5a-5i illustrent la succession des phases du fonctionnement de l'appareil selon la fig. 3, et

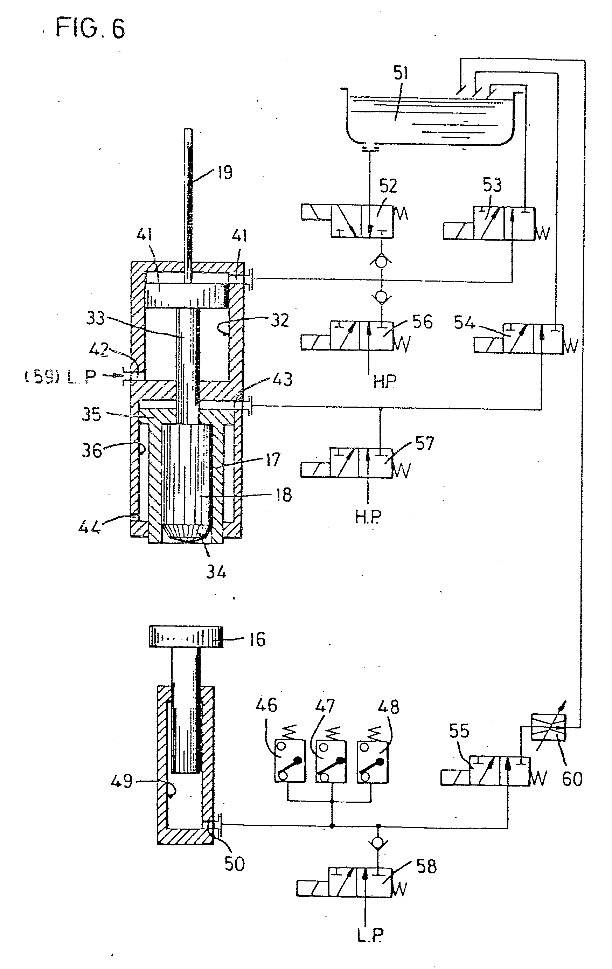

la fig. 6 représente le schéma de commande hydraulique des pistons et contre-piston qui équipent l'appareil selon la fig. 3.

Les fig. 1 et 2 ont déjà été brièvement mentionnées pour expliquer l'application des règles de la mécanique des sols dans le cas de la compression d'une masse de déchets. On reviendra sur ces figures plus loin, en liaison avec les explications concernant la forme de la tête du piston de compression.

La fig. 3 représente schématiquement un appareil pour le traitement de compression séparatrice des déchets, conforme à la conception particulière proposée. On voit que cet appareil comprend une trémie 1 dans laquelle sont déversés les déchets et au bas de laquelle se trouve un alimentateur à vis sans fin 2 entraîné en rotation par un dispositif d'entraînement classique, par exemple à l'aide d'une poulie 3. Cet alimentateur 2 amène les déchets déversés dans la trémie jusque dans une chambre de gavage 4 dont la partie inférieure est formée par un réceptacle 5 établi dans une table tournante 6 qui comprend, régulièrement espacés au voisinage de sa périphérie, un certain nombre de tels réceptacles 5. Au-dessus de la chambre de gavage se trouve un piston de gavage 7 monté dans un cylindre 8 et qui vient tasser une certaine masse de déchets dans le réceptacle. On remarque que la table tournante 6 s'appuie sur une surface plane 9

6

d'un bâti 10 représenté seulement d'une façon relativement schématique. La table tournante 6 comprend une partie inférieure tubulaire 11 qui tourne dans un alésage vertical du bâti et qui comporte, en dessous de cet alésage, des moyens d'entraînement en rotation et d'indexage 12, 13.

Un réceptacle 5 rempli de déchets à traiter est amené en une position de traitement qui est celle où se trouve le réceptacle 5 montré le plus à droite de la fig. 3 et marqué "5 (tr)".

Les réceptacles 5 sont de forme cylindrique. On remarque que leur partie qui est formée dans la table tournante ne consiste qu'en leur paroi latérale cylindrique, formée d'une chemise (interchangeable si nécessaire) 14 engagée dans un alésage vertical de la table tournante 6. Dans toutes les positions autres que la position de traitement, le fond du réceptacle 5 est constitué par la surface plane 9 du bâti, comme on peut le voir à l'endroit du réceptacle 5 dessiné le plus à gauche de la fig. 3. Ainsi, lorsque la table tournante tourne, les déchets contenus dans le réceptacle glissent sur la surface plane 9.

Toutefois, à l'endroit du poste de traitement, la surface plane 9 comprend une ouverture 15 à travers laquelle s'engage la tête d'un contre-piston (ou piston de réaction) 16. Le dessus de ce piston présente une surface plane et l'on comprend bien que, au moment de la rotation de la table tournante 6, cette surface plane supérieure de la tête du contre-piston 16 est amenée juste à fleur de la surface plane 9 du bâti. Cette situation est du reste représentée sur la fig. 5i illustrant la phase finale du procédé de traitement.

Dans la situation selon la fig. 3, le contre-piston 16 a déjà été relevé d'une certaine quantité à travers l'ouverture 15 pour pénétrer par le fond dans le réceptacle 5. Ce faisant, il soulève légèrement la masse de déchets à traiter, mais ceci se fait sans encombre car à ce moment-là le haut du réceptacle est encore ouvert (le remplissage et le tassage préalable des déchets
dans le réceptacle n'est effectué que presque jusqu'au
bord supérieur du réceptacle).

En variante, le haut du réceptacle pourrait, à ce moment-là, être déjà obturé complètement par
les pistons 17 et 18 se trouvant alors au raz de la table 6. Dans ce cas, indépendamment du remplissage et du
tassage préalables des déchets dans le réceptacle, la
montée du contre-piston 16 (pour obturer des orifices
d'échappement de boue, comme on le verra plus loin) n'aura eu d'autre effet qu'un léger tassage supplémentaire
des déchets à traiter dont le débordement sera empêché
par les pistons 17 et 18.

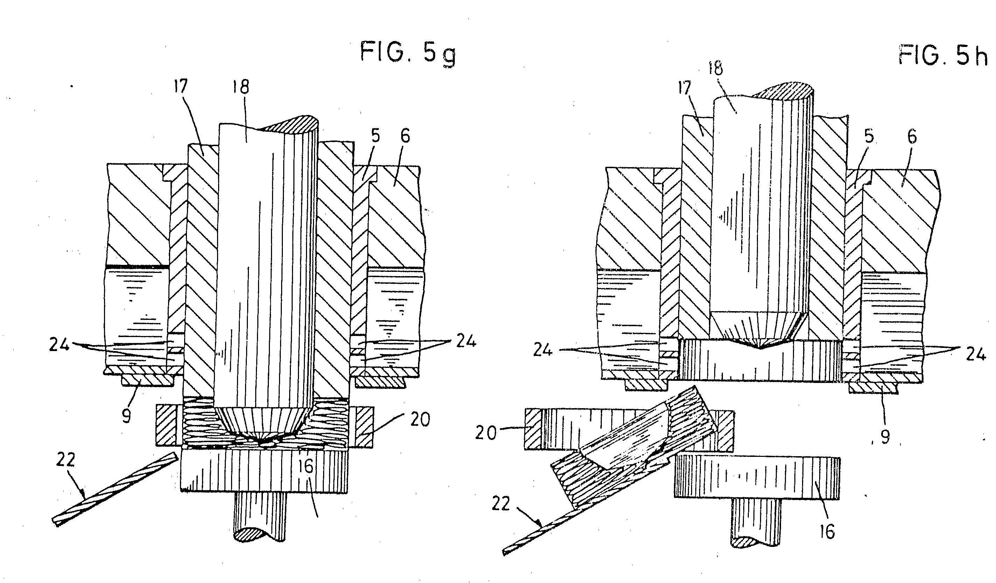

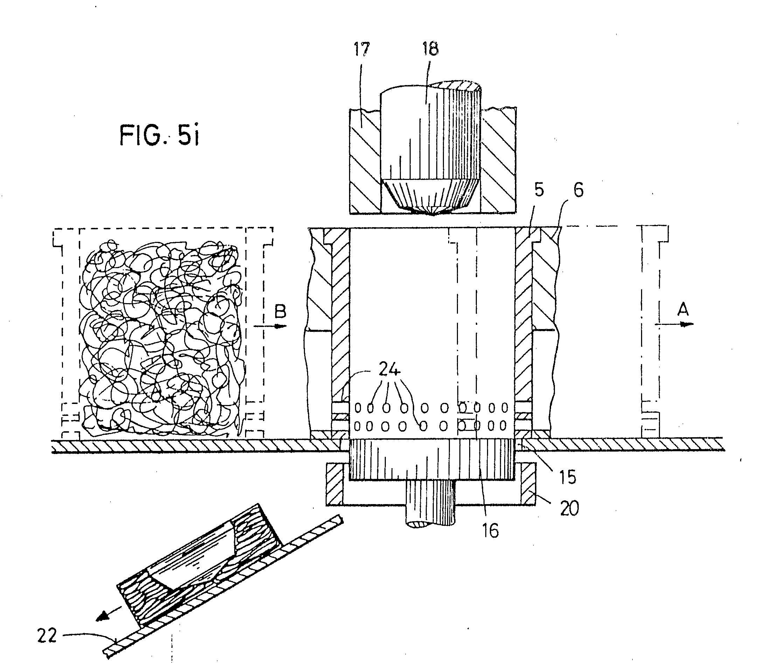

On considérera plus loin, en liaison avec
la fig.5, les différentes phases du procédé de traitement
de compression séparatrice de la masse de déchets.

Au-dessus du réceptacle 5 se trouvant en position de traitement, se trouve un agencement à pistons
qui comprend deux pistons coaxiaux (ou différentiels),
l'un extérieur 17 et l'autre intérieur 18. Ces deux pistons 17 et 18 sont conduits dans des cylindres adéquats
présentés par le bâti; cette construction de "l'agencement à pistons de compression" sera expliquée plus en détail en liaison avec la fig. 4. Le piston intérieur 18,
qui est le plus actif pour la compression des déchets à
comprimer, comprend une tige supérieure de visualisation
19 qui ressort du bâti vers le haut et dont laposition
permet de connaître exactement l'avancement du cycle de
traitement des déchets.

Comme on le verra en liaison avec la fig. 5,
l'agencement à pistons 17, 18 pénètre dans le réceptacle
rempli de déchets à traiter d'une façon qui aboutira à
l'extraction hors de la masse de déchets des matières liquides, pâteuses ou fluables, et à l'obtention d'une brique pratiquement sèche et tenace, constituant un agglomérat des déchets solides. Au cours et à la fin du traitement de compression par l'agencement à pistons 17, 18, le contre-piston 16 redescend presque jusqu'au niveau de la surface plane 9 du bâti, puis notablement au-dessous, de façon que la brique de déchets agglomérés susmentionnée sorte du réceptacle par le bas de celui-ci et vienne se placer au niveau d'un dispositif pivotant d'éjection de briques, ou extracteur de briques, 20. Un pivotement de cet extracteur ou éjecteur de briques 20 autour de son axe vertical 21 amène la brique agglomérée de déchets sur un plan incliné de réception de briques 22, en glissant sur lequel les briques sont amenées jusqu'à un déversoir de briques 23, au-dessous duquel les briques peuvent être recueillies dans des récipients de stockage ou de manutention adéquats.

On remarque par ailleurs, comme cela sera expliqué plus en détail en liaison avec la fig. 5, que les chemises 14 formant la paroi latérale de chaque réceptacle 5 comportent à leur partie inférieure des orifices d'extraction de boues 24. Au niveau de ces orifices, chaque alésage de la table tournante 6 dans lequel est engagée une chemise présente une chambre en retrait circulaire 25 reliée, par un canal radial d'évacuation 26, avec le canal tubulaire vertical 27 qui se trouve au centre de la partie inférieure tubulaire formant le pivot 11 de la table tournante 6, ce canal vertical 27 étant ouvert vers le bas et constituant, dans la table tournante 6, un canal collecteur des boues échappées des réceptacles par les orifices 24. Un canal coudé de sortie de boues 28 est établi dans le bâti et présente une extrémité intérieure au bâti qui forme un manchon 29 dans lequel s'engage, de façon pivotante, l'extrémité inférieure de la partie inférieure tubulaire 11 de la table 6. Ainsi, les boues échappées par les orifices 24 sont recueillies à la sortie extérieure 30 du canal fixe 28 de recueillement des boues.

9

On vient de décrire ainsi, en liaison avec la fig. 3, la constitution générale et l'essentiel du fonctionnement du dispositif de compression séparatrice de déchets conforme à la conception proposée.

La fig. 4 représente le détail de l'agencement à pistons de compression 17, 18, 19, de la fig. 3. Sur cette fig. 4, on voit une partie du bâti 10 qui forme un double cylindre pour les deux pistons 17 et 18 formant l'agencement à pistons de compression. Le piston intérieur 18 comprend une tête supérieure de coulissement 31 qui coulisse dans une partie cylindrique de bâti 32. Ce piston intérieur comprend également une partie amincie 33 qui coulisse à la fois dans un alésage correspondant ménagé dans une paroi intermédiaire du bâti et dans un alésage correspondant de la tête 35 du pistion extérieur 17. Cette tête 35 coulisse elle-même dans un alésage cylindrique 36 du bâti. On note que le piston intérieur 18 est muni d'une tête de compression interchangeable 34, à surfaces de compression tronconique et conique respectivement 37 et 38 (à la fig. 3, dessinée à plus petite échelle, la surface conique 38 est remplacée par une surface plate pour simplifier l'illustration).

On voit que la partie inférieure du piston 18 est quelque peu plus large que la partie amincie 33 et présente un épaulement 40 qui vient en appui contre un épaulement correspondant 39 présenté par le piston extérieur 17. Lorsque ces deux épaulements 39 et 40 sont en appui l'un contre l'autre, un mouvement vers le bas du piston extérieur 17 entraîne un mouvement égal vers le bas du piston intérieur 18, et, corrolairement, un mouvement vers le haut du piston intérieur 18 provoque un mouvement égal vers le haut du piston extérieur 17.

Un bossage central 45 du haut du cylindre 32 empêche la tête 31 du piston intérieur 18 de remonter au-delà d'une certaine hauteur. En dessus de la hauteur maximum à laquelle peut venir le dessus de cette tête 31,

12

le cylindre 32 comprend une entrée de pression d'huile 41; de même qu'il comprend, dans sa partie la plus basse, juste au-dessus de la cloison intermédiaire séparant les cylindres 32 et 36, une ouverture 42 par où l'huile peut sortir à basse pression, lorsque le piston 18 est contraint de se déplacer vers le bas. Ceci est effectué par l'application d'une haute pression d'huile à l'entrée d'huile 41 alors que l'huile peut sortir à basse pression par la sortie 42. Dans ce cas, le piston intérieur 18 descend seul, le piston extérieur 17 restant en position haute. Lorsque l'on applique une pression d'huile élevée à l'entrée d'huile 43, dans le cylindre 36, au-dessus de la tête de coulissement 35 du piston extérieur 17, celui-ci est pressé vers le bas, de l'huile ou de l'air susceptible de se trouver au-dessous de cette tête 35 pouvant s'échapper alors par l'ouverture 44 du cylindre 36. Lorsque le piston extérieur 17 est ainsi pressé vers le bas, il commence par rattraper le piston intérieur 18 (si celui-ci a déjà été abaissé d'une certaine quantité), puis lorsque les deux épaulements 39 et 40 sont en contact, il entraîne avec lui vers le bas le piston intérieur 18.

Pour faire remonter le piston intérieur 18, on inverse la direction de la différence de pression entre les entrées 41 et 42, ce qui repousse vers le haut la tête supérieure de coulissement 31 du piston 18. Par l'appui des épaulements 39 et 40, la remontée du piston intérieur 18 provoque également une remontée du piston extérieur 17, de sorte que l'on n'a jamais à inverser la direction de la différence de pression agissant sur le piston extérieur 17. (Tout au plus doit-on libérer la sortie d'huile par l'ouverture 43).

Sur la fig. 4, on voit également que la tige de visualisation 19 est solidaire du piston 18 et traverse le centre de la paroi supérieure du cylindre 32.

Différents joints d'étanchéité sont dispo-

11

sés aux endroits voulus pour assure le fonctionnement des pistons à l'aide d'huile sou pression; la fig. 4 montre la position de ces différents joints d'étanchéité pour lesquels on n'a pas introduit de signes de référence. Il faut noter tout de même que la disposition représentée des joints d'étanchéité est prévue pour le cas où l'espace situé en dessous de la tête supérieure de coulissement 35 du piston extérieur 17 est rempli d'air; s'il était rempli d'huile, un joint supplémentaire d'étanchéité devrait être disposé dans l'alésage inférieur du cylindre 36, où coulisse le piston extérieur 17.

les surfaces tronconique et conique 37 et 38 sont déterminées en fonction des règles de la mécanique des sols, en correspondance avec ce que montre la fig. 2, afin d'assurer une compression relativement constante des déchets situés dans le réceptacle en position de ce traitement.

On note que, suivant le genre de déchets à traiter, on peut changer la tête de compression amovible 34, pour avoir des surfaces de compression conique et tronconique aussi bien adaptées que possible aux caractéristiques de fluage des déchets à traiter.

La fig. 5, composée de neuf vues 5a à 5i, illustre le processus de compression des déchets. La fig. 5a représente la phase qui vient immédiatement après celle qui est représentée à la fig. 3. Le contre-piston 16 est déjà remonté à l'intérieur du réceptacle 5 et sa paroi latérale cylindrique obture les orifices d'échappement de boues 24. Par ailleurs, l'agencement à pistons 17, 18 a déjà commencé de s'engager par le dessus dans le réceptacle 5, et il commence de comprimer les déchets qui y sont contenus. Une pression d'huile appliquée à l'entrée d'huile 43 (fig. 4) fait descendre simultanément les deux pistons 17 et 18 pour comprimer notablement les déchets contenus dans le réceptacle 5, sans possibilité d'échappement par les orifices 24 obturés par le contre-piston 16, et cette phase est représentée à la fig. 5b. Ensuite, une pression d'huile appliquée à l'entrée d'huile sous pression 41 (fig. 4) fait descendre le seul piston central 18 dont les surfaces 37 et 38 opèrent une compression pratiquement uniforme dans toute la masse de déchets, conformément à ce qu'illustre la fig. 2. Le contre-piston 16 est commandé par pression d'huile d'une façon qui sera examinée plus en détail à la fig. 6. Les vannes de commande d'arrivée d'huile dans le cylindre commandant le piston 16 sont des vannes parfaitement étanches; du fait de l'incompressibilité de l'huile, une position quelconque donnée au contre-piston 16 reste fixe, quelle que soit la pression qui lui est imposée tant qu' aucune huile ne peut s'échapper hors du cylindre qui le commande. Sur le circuit d'huile commandant ce cylindre, des détecteurs de pression détectent la pression qui règne dans le réceptacle 5. Lorsqu'une certaine pression donnée (de l'ordre de 100kg/cm$^2$ à 500 kg/cm$^2$) est atteinte, le fonctionnement d'un de ces détecteurs de pression, par exemple le détecteur de pression 46 (fig.6), ouvre une vanne d'échappement d'huile qui permet au contre-piston 16 de descendre légèrement, ce qui fait qu'une partie des orifices 24 sont maintenant ouverts. Dès que cette descente du contre-piston 16 a légèrement fait diminuer la pression, l'huile est à nouveau bloquée dans son cylindre de commande, ce qui fait que la phase durant laquelle le piston 16 commence de descendre, phase représentée à la fig. 5c, se fait pratiquement à pression constante. Dans la situation représentée à la fig. 5d, on a fait descendre encore un peu plus le cylindre extérieur 17, de façon qu'il "rattrape" le piston intérieur 18 (appui des épaulements 39 et 40, fig. 4), ce qui fait que la partie de déchets éventuellement moins bien comprimée, autour du piston 18, dans la position représentée à la fig. 5c, subit également une compression du même ordre de grandeur que tout le reste des déchets. Cette suite d'opérations par laquelle le piston intérieur 18 est avancé seul, puis est rattrapé par le piston extérieur 17, et ainsi de suite, se poursuit comme le montre la fig. 5e, et il arrive un moment où le contre-piston 16 se trouve suffisamment bas pour que tous les orifices d'échappement 24 soient libérés, ce qui est visible à la fig. 5e. Sous l'effet de la pression, à partir de la situation représentée à la fig. 5c, et d'une manière progressivement toujours plus prononcée jusqu'à la situation représentée à la fig. 5e, les substances liquides, pâteuses ou fluables, situées dans les débris traités s'échappent par les orifices 24 et sont collectés par l'intermédiaire de la chambre 25, des conduits 26 et 27, et du canal d'écoulement 28 (fig. 3). A partir du moment où le contre-piston 16 a pris la position représentée à la fig. 5e (tous les orifices 24 ouverts), position qui est détectée par des moyens de détection de position non représentés, le détecteur de pression qui avait permis l'abaissement progressif de ce contre-piston 16 jusque-là (par exemple le détecteur de pression 46, fig. 6), cesse d'être actif et le contre-piston 16 se maintient dans cette position. Le jeu de mouvement de descente alternée des pistons 17 et 18 se poursuit jusque dans la position représentée à la fig. 5f, dans laquelle pratiquement toutes les matières liquides, pâteuses ou fluables se seront échappées de la masse de déchets par l'intermédiaire des orifices d'échappement de boues 24. Cette position de la fig. 5f, c'est-à-dire la position dans laquelle on admet que toutes les matières liquides, pâteuses ou fluables à extraire ont été extraites, est détectée par une valeur de pression, notablement plus élevée, par exemple à l'aide du détecteur de pression 47 de la fig. 6. Une fois que ce degré de pression est acquis, l'échappement d'huile hors du cylindre commandant le contre-piston 16 peut reprendre et, sous l'action de l'agencement à pistons 17, 18 le contre-piston 16, supportant une brique de déchets main-

14

tenant pratiquement débarrassée de toute substance liquide, pâteuse ou fluable, descend jusque dans une position, représentée à la fig. 5g, dans laquelle la briquete de déchets agglomérés est sortie de la partie cylindrique du réceptacle 5 par le bas de celle-ci, a travers l'ouverture adéquate 15 de la plaque de bâti, et se trouve dans une ouverture ménagée dans l'extracteur de briques 20.

A ce moment-là, la différence de pression est inversée entre les entrées d'huile 41 et 42 (fig. 4) et le piston central 18 remonte, entraînant avec lui le piston extérieur 17. En même temps, dès que la pression de l'agencement à pistons a cessé, l'extracteur de briques 20 se déplace, comme cela est illustré à la fig. 5h, et fait passer la brique de déchets agglomérés du dessus de la tête du contre-piston 16 sur la surface inclinée de réception des briques 22. Ensuite, comme le montre la fig. 5i, le piston 16 remonte jusqu'à ce que sa surface supérieure se trouve à fleur de la surface plane 9 (après que l'agencement d'éjection de briques 20 ait ramené son ouverture ou une de ses ouvertures en alignement avec l'ouverture 15 du bâti) et l'agencement à pistons 17, 18 est remonté jusqu'au-dessus de la surface supérieure de la table 6 et de la chemise formant paroi du réceptable 5.

Dans cette situation représentée schématiquement à la fig. 5i, la table 6 peut tourner de façon à amener au poste de traitement un nouveau réceptacle préalablement rempli d'une nouvelle quantité de déchets à traiter. Cela est représenté en traits pointillés à la fig. 5i; on voit que le réceptacle A, vide, s'en va, tandis qu'un réceptacle B, rempli, s'avance pour venir occuper la position de traitement. Pendant ce temps, la brique de déchets agglomérés glisse sur la plance inclinée 22 pour être recueillie sous le déversoir de briques 23 (fig. 3). Ensuite, le contre-piston 16 pourra remonter de

15

façon à obturer les orifices 24 du nouveau réceptacle, tandis que l'agencement à pistons 17, 18 viendra s'enfoncer par le haut sur ce nouveau réceptacle, cette position pouvant par exemple être détectée par une pression inférieure, à l'aide du détecteur 48 de la fig. 6. L'appareil se retrouve alors dans la situation représentée à la fig. 5a, et le même cycle se reproduit.

On notera que, pour simplifier le fonctionnement de l'éjection des briques, l'éjecteur de briques 20 comprend avantageusement deux ouvertures, qui viennent alternativement se placer dans l'axe du réceptacle contenant les déchets à traiter. L'autre ouverture entraîne la brique agglomérée pour la débarrasser, ce débarrassement se faisant une fois par la gauche et l'autre fois par la droite, (c'est-à-dire par dessus et par dessous le plan de la fig. 3), ce qui n'est nullement gênant puisque les briques parviennent de toute façon dans le déversoir de briques 23 du fait du mouvement tournant de l'éjecteur 20 (fig. 3).

Dans une variante d'exécution particulièrement simple, toute la partie du dispositif comprenant la table tournante peut être supprimée et la partie comprenant les pistons (partie droite de la fig. 3) peut être montée horizontalement. L'éjecteur 20 peut être supprimé, les briques tombant par gravité, le remplissage peut avantageusement être fait par l'orifice sinon obturé par le contre-piston 16, ce dernier effectuant alors le tassage, de sorte que l'agencement à pistons 17, 18 n'a plus à être complètement dégagé du réceptacle 5.

Par ailleurs, durant toute la partie des opérations de compression allant de la situation de la fig. 5c à celle de la fig. 5f, des boues contenant de l'eau avec des matières organiques et/ou des matières pouvant être utiles à l'enrichissement des sols, c'est-à-dire des matières biologiquement utiles, sont recueillies à l'orifice de sortie de boues 30. Conditionnées sous une forme adéquate, partiellement séchées, ou mises en sacs ou en récipients, ces boues constitueront des substances d'enrichissement de sols fort intéressantes. Par ailleurs, les briques déchargées par le déversoir de briques 23 seront constituées de déchets agglomérés ayant une bonne ténacité, c'est-à-dire peu friable, ce qui permettra leur stockage, puis leur manutention, notamment pour servir de combustible dans des installations de chauffage. Ces briques ou briquettes combustibles, ne contenant presque plus d'eau, s'avéreront bien supérieures, comme matériaux de chauffage, aux déchets bruts que l'on incinère souvent dans les usines d'incinération et dont résultent le plus souvent davantage de fumées nuisibles que de chaleur.

La fig. 6 représente le schéma de commande hydraulique de l'appareil. On y voit à nouveau l'agencement à pistons comprenant les deux pistons, central et extérieur 17 et 18, de même que le contre-piston 16. On voit que ce dernier est commandé par un cylindre hydraulique 49 auquel de l'huile est amenée par une entrée d'huile 50. Les vannes hydrauliques commandées électriquement que l'on va dénommer ci-après, pour raison de commodité, électro-vannes, ne sont pas des électro-vannes de type courant (qui présentent souvent un certain défaut d'étanchéité), mais des vannes absolument étanches commandées par des relais ou moteurs électriques. On voit que l'on a une électro-vanne 52 pour mettre de l'huile sous la pression atmosphérique (pression sur un réservoir d'huile ouvert 51) dans le conduit 41. Trois électro-vannes 53, 54 et 55 sont prévues pour laisser échapper l'huile respectivement du conduit 41, du conduit 43, et du conduit 50. Vu la position basse du cylindre 49 et du conduit 50, une pompe 60 est prévue pour l'évacuation de cette huile. D'autre part, deux électro-vannes, 56 et 57 amènent de l'huile à haute pression H.P., respectivement dans les conduits 4. et 13. Enfin, une électro-vanne 58 amène au conduit 50 de l'huile sous une pression dénommée B.P., supérieure à la pression d'huile dans le réservoir d'huile 51 mais inférieure à la haute pression d'huile H.P. Cette même basse pression d'huile B.P. est appliquée en permanence en 59, au conduit 42. On comprend que par une commande sélective des relais ou des moteurs électriques qui commandent les différentes électro-vannes, le fonctionnement qui vient d'être expliqué en détail en liaison avec les fig. 5a à 5i peut être aisément réalisé. On remarque que le piston 18, par sa tête supérieure de coulissement 31, est commandé toujours à l'encontre de la pression moyenne constante B.P., l'application au conduit 41 de la haute pression H.P. faisant descendre ce piston, et l'application à ce conduit 41 de la pression très voisine de la pression atmosphérique que l'on a dans le réservoir d'huile 51 faisant remonter ce piston 18. Par ailleurs, le piston extérieur 17 ne doit être commandé que dans le sens de la descente; dans le sens de la remontée (laquelle est sans importance pour le processus de compression), ce piston extérieur 17 est tiré par le piston intérieur 18.

On remarque que dans le processus qui vient d'être décrit, on n'a jamais de redistribution importante de la masse de déchets au cours de sa compression de séparation des particules liquides, pâteuses ou fluables, ce qui fait que la brique de déchets solides que l'on obtient après extraction de ces matières est très peu friable. Ceci est dû à une compression fort uniforme que l'on assure de la manière représentée schématiquement à la fig. 2. Sur celle-ci, comme du reste sur la fig. 1, il faut se représenter les champs de compression dessinés sous formes de traits comme étant des tores passant en dessus et en dessous du plan de la figure, autour d'un axe vertical situé dans le plan de la figure. Cette compression à pression relativement constante, de même que le non broyage de la masse en compression (le broyage qui intervenait dans les machines selon l'art antérieur est remplacé ici par des contractions ou cisaillements internes des particules de déchets), assurent une qualité de tenacité remarquable aux briques obtenues par le procédé selon l'invention, tout particulièrement lorsque ce procédé est mis en oeuvre par l'appareil décrit, qui constitue aussi un aspect de l'invention. Par ailleurs, on obtient un maximum de boues sous forme pâteuse, plus ou moins liquides selon la nature des déchets, qui contiennent des matières organiques et/ou des matières biologiquement utiles aptes à constituer des additifs de sols très appréciés.

Revenant à la fig. 4, on remarque que le profil des surfaces tronconiques et coniques de la tête de compression 34 sont établies selon les règles de la théorie de la mécanique des sols et de celle de l'élasticité des matériaux (selon Hertz). Cette tête de compression pourrait également avoir d'autres formes géométriques, par exemple une forme de paraboloïde ou une forme composée de différentes surfaces de révolution, réglées, ou non réglées, ces formes répondant toujours aux règles de la mécanique des sols compte tenu de la nature des déchets à traiter et des dimensions du réceptacle. Comme cette tête de compression 34 est interchangeable, on peut de cette façon adapter facilement l'appareil au traitement de déchets de différentes natures, présentant différentes caractéristiques de fluage.

On rappelle également que, par l'interchangeabilité des chemises 14 (réceptables 5 de la fig. 3), on peut avoir des orifices d'échappement de boues 24 de différentes grandeurs, également adaptés à la nature des déchets à traiter, et, le cas échéant, à certaines caractéristiques des boues que l'on désire recueillir (par exemple dimension maximum des petites

19

particules solides que l'on peut admettre dans ces
boues, etc...)

20

REVENDICATIONS:

1. Procédé de compression séparatrice de déchets, notamment de déchets composés au moins partiellement de matières organiques, afin d'en extraire d'une part, sous forme liquide ou pâteuse, des boues contenant de l'eau avec des matières organiques et/ou des matières biologiquement utiles, et d'autre part, sous forme solide et formées de déchets comprimés, des briques suffisamment peu friables pour permettre un stockage et diverses manutentions d'utilisation, notamment en tant que briquettes combustibles, comprenant les étapes suivantes:

- on introduit une certaine quantité de déchets à traiter dans un réceptacle,

- on bouche le réceptacle rempli au moyen d'un agencement à pistons,

- on provoque, par un déplacement de l'agencement à piston réduisant le volume fermé du réceptacle, une première compression des déchets à traiter contenus dans le réceptacle, sans permettre aucun échappement de matière hors de celui-ci,

- on provoque ensuite l'ouverture d'orifices d'échappement de boues dimensionnées pour interdire l'échappement à travers eux de particules non fluables dont les dimensions dépassent certaines limites déterminées par la section des orifices,

- et on poursuit la compression des déchets dans le réceptacle au moyen de l'agencement à pistons jusqu'à échappement, par les dits orifices, de la quasi totalité des matières liquides, pâteuses, ou fluables, l'atteinte de cet état étant assuré par l'atteinte d'un certain degré de pression dans le réceptacle,

caractérisé en ce qu'on utilise ledit réceptacle avec l'agencement à pistons dans une conformation structurelle telle que toute la masse de déchets comprimée dans le réceptacle se trouve sujette à une pression substantiellement uniforme provoquant dans la masse de déchets des contractions et cisaillements internes sans broyage, et on applique l'action de compression en un processus d'avances élémentaires progressives de l'agencement à pistons, exempt de reculs et ré-avances impliquant un broyage source de friabilité de la brique, en établissant par cet unique processus une structure de brique comprimée homogène et solide.

2. Procédé selon la revendication 1, caractérisé en ce que, préalablement à la compression des déchets, on tasse ceux-ci à l'intérieur du réceptacle et on complète le remplissage du réceptacle, en tassant également le complément de remplissage.

3. Procédé selon la revendication 1, caractérisé en ce qu'on utilise un agencement à piston constitué de deux pistons coaxiaux, l'un intérieur et l'autre extérieur, le réceptacle étant cylindrique et ayant, à un jeu de coulissement près, un diamètre intérieur correspondant au diamètre extérieur du piston extérieur, et en ce qu'on fait avancer les deux pistons intérieur et extérieur tout d'abord simultanément, puis alternativement en faisant avancer une fois le piston intérieur et une fois le piston extérieur, de façon que la distance entre leurs extrémités ne dépasse jamais une certaine mesure inférieure au diamètre du piston intérieur.

4. Procédé selon la revendication 1, caractérisé en ce que, pour assurer la substantielle uniformité des pressions dans la masse de déchets, on utilise, en tant que dit agencement à piston, un unique piston dont la tête présente au moins une partie de surface conique ou tronconique apte à exercer une action de compression contre la masse de déchets, ledit réceptacle utilisé ayant une forme cylindrique dont le diamètre intérieur est substanciellement égal au diamètre extérieur du dit unique piston.

5. Procédé selon la revendication 3, caractérisé en ce que, pour assurer la substantielle uniformité des pressions dans la masse de déchets, on utilise, en tant que piston intérieur du dit agencement à pistons, un piston dont la tête présente au moins une partie de surface conique ou tronconique apte à exercer une action de compression contre la masse de déchets.

6. Procédé selon la revendication 4 ou la revendication 5, caractérisé en ce que la forme de la dite tête de piston comprend, au-delà de ladite partie de surface qui est tronconique, une surface conique dont la génératrice fait avec l'axe du piston un angle plus grand que la génératrice de la surface tronconique.

7. Procédé selon l'une des revendications 1 à 6, caractérisé en ce que le dit réceptacle comprend un fond formé d'un contre-piston et une surface latérale présentant les dits orifices d'échappement de boues dans sa partie voisine du fond, le dit contre-piston étant enfilé dans le réceptacle cylindrique de façon à boucher tout d'abord les dits orifices, puis à reculer progressivement, de façon à ouvrir les dits orifices, sous l'action de l'agencement à piston qui exerce face à lui son action de compression.

8. Procédé selon la revendication 7, caractérisé en ce que, lorsque la compression des déchets a atteint le degré auquel la quasi totalité des matières liquides, pâteuses ou fluables s'est échappée, le contre-piston sort par le fond de l'enceinte cylindrique formant le réceptacle, l'agencement à piston continuant à progresser jusqu'à ce que la brique de matière solide résultant de la compression se situe au-delà du fond de la partie cylindrique du réceptacle de façon à être éloignée du réceptacle, tandis que l'agencement à piston recule à l'intérieur du réceptacle en vue d'un nouveau remplissage.

9. Appareil pour la mise en jeu du procédé selon la revendication 1, comprenant:

- au moins un réceptacle apte à être rempli d'une certaine quantité de déchets à traiter,

- un agencement à piston, en regard duquel se situe le réceptacle rempli de déchets, et qui est apte à s'enfoncer dans ce réceptacle pour effectuer la compression des déchets, l'agencement à piston comprenant un unique piston ou un ensemble de deux pistons coaxiaux, l'un extérieur et l'autre intérieur, et le dit réceptacle étant de forme cylindrique, son diamètre intérieur correspondant au diamètre extérieur de l'unique piston ou du piston extérieur de l'agencement à piston,

et un contre-piston apte à former le fond du réceptacle, en s'y avançant pour venir obturer des orifices d'échappement de boues situés dans la partie voisine du fond de la paroi latérale du réceptacle pour assurer une précompression sans échappement de la masse de déchets, puis reculant pour libérer ces orifices tandis que l'agencement à piston poursuit son action jusqu'à une pression élevée provoquant l'expulsion par ces orifices de toutes les matières liquides, pâteuses ou fluables hors de la masse de déchets.

10. Appareil selon la revendication 9, caractérisé en ce que le dit agencement à piston comprend au moins un piston muni d'une tête de pression présentant une surface tronconique dont la génératrice fait un certain angle avec l'axe du piston et, à l'extrémité de cette surface tronconique, une surface conique dont la génératrice fait avec l'exe du piston un angle pous grand que celle de la surface tronconique, les dimensions et les angles de ces surfaces coniques et tronconiques étant déterminés, relativement aux dimensions du réceptacle cylindrique, de façon à maintenir, en vertu des règles de la mécanique des soles appliquée dans le cas d'un volume de fluage limité, une pression substantiellement uniforme dans toute la masse de déchets dans le réceptacle.

11. Appareil selon la revendication 9, caractérisé en ce que le dit agencement à piston comprend deux pistons coaxiaux, l'un extérieur et l'autre intérieur, le piston intérieur étant muni d'une tête de pression présentant une surface tronconique dont la génératrice fait un certain angle avec l'axe des pistons, et, à l'extrémité de cette surface tronconique, une surface conique dont la génératrice fait avec l'axe des pistons un angle plus grand que celle de la surface tronconique, les dimensions et les angles de ces surfaces coniques et tronconiques étant déterminés, relativement aux dimensions du réceptacle cylindrique, de façon à maintenir, en vertu des règles de la mécanique des sols appliquée dans le cas d'un volume de fluage limité, une pression substantiellement uniforme dans toute la masse de déchets dans le réceptacle.

12. Appareil selon la revendication 10 ou la revendication 11, caractérisé en ce que les dites dimensions et les dits angles des surfaces coniques et tronconiques sont établis, en vertu des principes de la mécanique des sols dans le cas d'un espace de fluage limité, de façon que la pression s'établissant dans les endroits où règne la pression la plus faible soit au moins égale à approximativement la moitié de la pression régnant dans les endroits ayant la pression la plus élevée.

13. Appareil selon l'une des revendications 9 à 12, caractérisé en ce que le contre-piston est agencé pour se dégager par le fond de la paroi latérale cylindrique du réceptacle, d'une quantité suffisante pour que toute la masse de déchets comprimés en appui contre le contre-piston sorte également de la paroi cylindrique du réceptacle et se décharge sous forme d'une brique.

14. Appareil selon l'une des revendications 9 à 13, caractérisé en ce que les dits pistons de l'agencement à piston et le dit contre-piston sont commandés hydrauliquement, d'une façon telle que, au début de l'opération, le contre-piston reste immobile en une position dans laquelle il obture les dits orifices, tandis que les deux pistons formant l'agencement à piston avancent simultanément de façon à provoquer la première compression, sans échappement, des déchets, cés moyens de commande hydrauliques étant tels qu'ensuite, alors qu'une certaine pression est déjà appliquée à la masse de déchets, le contre-piston recule progressivement de façon à libérer les dits orifices, tandis que les deux pistons formant l'agencement à piston avancent alternativement, une fois l'un, une fois l'autre, par des pas dont la longueur d'avancement ne dépasse jamais une certaine valeur inférieure au diamètre du piston intérieur.

15. Brique solide et/ou boue liquide ou pâteuse résultant du procédé selon la revendication 1.

16. Brique solide selon la revendication 15, caractérisée en ce qu'elle est de consistance et de dimensions la rendant propre à une utilisation comme briquette combustible dans une installation de chauffage.

17. Boue liquide ou pâteuse selon la revendication 15, comprenant des matières organiques et/ou des matières biologiquement utiles, caractérisée en ce qu'elle est mise sous une forme de conditionnement la rendant propre à être utilisée comme additif de sol pour l'agriculture.

FIG. 1

FIG. 2

# FIG. 3

FIG. 4

FIG. 5a  FIG. 5b  FIG. 5c

FIG. 5d  FIG. 5e  FIG. 5f

FIG. 5 g

FIG. 5 h

0016734

FIG. 5i

FIG. 6

7/7

0016734

0016734

Office européen
des brevets

**RAPPORT DE RECHERCHE EUROPEENNE**

Numéro de la demande

EP 80 21 0 7.

| Catégorie | Citation du document avec indication, en cas de besoin, des parties pertinentes | Revendication concernee |
|---|---|---|
| DA | FR - A - 487 552 (W.J. NORRIS)<br>* Ensemble du brevet * | 1,9 |
| | -- | |
| DA | FR - A - 419 408 (O. RIEMANN)<br>* Ensemble du brevet * | 1 |
| | -- | |
| DA | FR - A - 617 721 (L. VARLIAUD, J. MEYRIAL)<br>* Page 1, lignes 14-27; figures 1,2 * | 3 |
| | ---- | |

## DOCUMENTS CONSIDERES COMME PERTINENTS

### CLASSEMENT DE LA DEMANDE (Int. Cl.)

B 30 B 9/06
C 10 L 5/40

### DOMAINES TECHNIQUES RECHERCHES (Int. Cl. 3)

B 30 B
C 10 L

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le present rapport de recherche a été établi pour toutes les revendications |
|---|---|

| Lieu de la recherche | Date d'achevement de la recherche | Examinateur |
|---|---|---|
| La Haye | 23-06-1980 | BOLLEN |

OEB Form 1503.1  06.78